# DEMANDE DE BREVET EUROPEEN

(11) **EP 0 614 804 A1**
(43) Date de publication de la demande: **14.09.1994**
(21) Numéro de dépôt: 94400441.5
(22) Date de dépôt: 02.03.1994
(51) Int. Cl.: B64C 25/34, B64C 25/10

(54) **Train d'atterrissage relevable pour avion gros porteur**

(30) Priorité: 08.03.1993 FR 9302641
(71) Demandeur: MESSIER BUGATTI, F-78140 Velizy Villacoublay (FR)
(72) Inventeur: Derrien, Michel, F-78000 Versailles (FR); Guyot, Bernard, F-77240 Seine Port (FR)
(74) Mandataire: Jaunez, Xavier

(57) **Abrégé**

L'invention concerne un train d'atterrissage relevable du type comportant une pluralité de jambes indépendantes agencées les unes derrière les autres.

Conformément à l'invention, chaque jambe (101) comporte une pièce de structure (102) solidaire de la structure d'avion, et un balancier (103) articulé sur cette pièce de structure en pouvant pivoter autour d'un axe transversal (Y), de façon que ce balancier soit relevable verticalement par actionnement d'un vérin de manoeuvre (105). De plus, chaque jambe (101) comporte une génération hydraulique autonome (120) qui lui est propre, pour actionner le vérin de manoeuvre (105) associé, afin de pouvoir relever au moins partiellement le balancier (103) de n'importe quelle jambe du train lorsque l'avion est au sol, en cours de roulage ou à l'arrêt.

## Description

La présente invention concerne les trains d'atterrissage relevables pour avions gros porteurs.

Dans le cas des avions gros porteurs, c'est-à-dire dont le poids dépasse une centaine de tonnes, et en particulier à voilure haute, il est généralement prévu des trains de fuselage multi-roues afin d'avoir une répartition convenable des charges auxquelles sont soumis ces trains d'atterrissage.

Chacun des trains d'atterrissage est alors du type comportant une pluralité de jambes, indépendantes ou non, agencées les unes derrière les autres pour former, en position train bas, une rangée parallèle au plan longitudinal médian de l'avion, et en extrémité de chacune desquelles est montée une paire de roues en diabolo. Ainsi, en position train bas, chaque atterrisseur comporte une rangée de diabolos disposés les uns derrière les autres dans la direction du plan longitudinal médian de l'avion, le nombre des diabolos allant en général de deux à sept.

On a déjà proposé de réaliser un train d'atterrissage relevable multi-roues à relevage vertical, avec un couplage de tous les diabolos d'une même rangée, comme illustré dans le document US-A-3 315 919. Chaque jambe est alors réduite à un simple balancier articulé directement sur la structure d'avion, dont le basculement est obtenu par une tringlerie de couplage coulissant horizontalement et reliée à chaque balancier par un amortisseur associé. Un tel couplage mécanique a le mérite de la simplicité et de la compacité, mais il est très contraignant dans la pratique car tous les diabolos d'une même rangée sont à la même hauteur. Par suite, les changements de roues à l'arrêt nécessitent un démontage partiel de la tringlerie. De plus, la manoeuvrabilité au sol est d'autant plus limitée que les rangées comportent un nombre élevé de diabolos, ce qui oblige à utiliser des systèmes directionnels propres à chaque diabolo (pour faire tourner le diabolo autour de son axe central vertical). Cette solution a été ensuite simplifiée pour les avions légers, en supprimant la tringlerie de couplage (FR-A-1.498.165), mais toujours avec des jambes réduites à de simples balanciers articulés. La génération hydraulique de l'avion permet alors d'actionner sélectivement les vérins de manoeuvre associés, pour incliner l'avion autour de son axe longitudinal ou autour de son axe transversal, ces manoeuvres nécessitant que le ou les moteurs de l'avion soient en marche.

Une solution analogue visant à permettre des manoeuvres de baraquage au sol est décrite dans FR-A-1.246.932, mais avec une structure plus complexe inhérente à l'utilisation d'un vérin de baraquage logé à l'intérieur du caisson d'amortisseur.

On a proposé plus récemment, pour améliorer la manoeuvrabilité tout en préservant la compacité, d'utiliser des jambes indépendantes, articulées directement sur la structure d'avion pour pouvoir pivoter autour d'un axe longitudinal commun, de façon à constituer un train de fuselage relevable latéralement, comme illustré dans les documents US-A-4 406 432 et US-A-4 638 962.

Dans ce cas, chaque jambe possède individuellement son vérin de manoeuvre (agencé transversalement), et son système directionnel intégré qui permet de faciliter la manoeuvrabilité lorsque le train comporte un grand nombre de diabolos ; chaque système directionnel permet en outre de faire tourner le diabolo correspondant de 90° lors du relevage, de façon que les diabolos d'une même rangée soient agencés coaxialement lorsque le train est rentré. Cependant, les vérins de manoeuvre d'une même rangée agissent nécessairement en synchronisme, pour une descente ou un relevage simultané de toutes les jambes de la rangée, car ces vérins sont commandés par une génération hydraulique commune, ce qui reste contraignant. D'ailleurs, l'homme de l'art n'envisagerait pas d'utiliser des générations indépendantes avec un tel agencement, car cette indépendance présenterait peu d'intérêt en raison de l'impossibilité de relever une jambe individuellement lorsque l'avion est au sol, en cours de roulage ou à l'arrêt, en raison de l'appui de la paire de roues concernée.

L'invention a précisément pour but de concevoir un train d'atterrissage relevable pour avion gros porteur qui ne présente pas les inconvénients et/ou limitations précités.

L'invention a ainsi pour objet de réaliser un train d'atterrissage relevable pour avion gros porteur dont la structure confère une grande souplesse d'utilisation, tant au regard de la manoeuvrabilité de l'avion lors du roulage qu'au regard d'un changement de roue à l'arrêt.

L'invention a également pour objet de réaliser un train d'atterrissage multi-roues autorisant une intervention visant à baraquer l'avion.

Il s'agit plus particulièrement d'un train d'atterrissage relevable pour avion gros porteur, du type comportant une pluralité de jambes indépendantes agencées les unes derrière les autres pour former, en position train bas, une rangée parallèle au plan longitudinal médian de l'avion, et en extrémité de chacune desquelles est montée une paire de roues en diabolo, caractérisé en ce que chaque jambe comporte une pièce de structure rigidement solidaire d'une structure d'avion, et un balancier articulé sur l'extrémité inférieure de cette pièce de structure en pouvant pivoter autour d'un axe perpendiculaire au plan longitudinal médian de l'avion, de façon que ledit balancier soit relevable verticalement avec sa paire de roues par actionnement d'un vérin de manoeuvre associé à cette jambe, et ladite jambe comporte en outre une génération hydraulique autonome qui lui est propre pour actionner le vérin de manoeuvre associé, afin de pouvoir relever au moins partiellement le balancier de n'importe quelle jambe du train lorsque l'avion est au sol, en cours de roulage ou à l'arrêt.

Selon un premier mode d'exécution possible, chaque jambe dudit train comporte un amortisseur articulé à une extrémité sur un appendice du balancier de cette jambe, et à son autre extrémité sur un panneau qui est articulé en partie haute de la pièce de structure associée, les axes d'articulation concernés étant parallèles à l'axe d'articulation dudit balancier. Avantageusement alors, l'amortisseur inclut un système d'affaissement commandé par la génération hydraulique de la jambe concernée, afin de pouvoir baraquer l'avion à l'arrêt au sol pour lui conférer une assiette inclinée prédéterminée.

A titre d'exemple particulier, le vérin de manoeuvre de chaque jambe est articulé à une extrémité sur la pièce de structure associée, et à son autre extrémité sur un système articulé reliant ledit vérin au panneau articulé associé, les axes d'articulation concernés étant parallèles à l'axe d'articulation du balancier associé. De préférence alors, le système articulé comporte un levier articulé sur la pièce de structure associée, constitué par un bras qui est relié au vérin de manoeuvre, et un autre bras qui est relié à une extrémité d'une bielle banane dont l'autre extrémité est articulée sur un appendice du panneau associé.

Il est par ailleurs avantageux que la pièce de structure associée soit reliée à la structure d'avion à la fois directement, et indirectement par l'intermédiaire d'éléments de contreventement comportant un panneau et au moins une bielle.

Selon un deuxième mode d'exécution possible, chaque jambe dudit train comporte un vérin-amortisseur faisant fonction d'amortisseur et de vérin de manoeuvre, ledit vérin-amortisseur étant articulé à une extrémité sur un appendice du balancier de cette jambe, et à son autre extrémité sur une pièce fixe rigidement solidaire de la structure d'avion, les axes d'articulation concernés étant parallèles à l'axe d'articulation dudit balancier.

Avantageusement alors, le vérin-amortisseur inclut un système d'affaissement commandé par la génération hydraulique de la jambe concernée, afin de pouvoir en plus baraquer l'avion à l'arrêt au sol pour lui conférer une assiette inclinée prédéterminée.

Il est également intéressant que la pièce fixe soit constituée, pour les jambes qui sont en arrière de la jambe la plus avancée de sa rangée, par la pièce de structure de la jambe précédente, la pièce fixe associée à la jambe la plus avancée étant une pièce séparée reliée par trois points à la structure d'avion, en particulier une pièce en forme de V s'étendant transversalement et contreventée par une bielle associée. De préférence encore, les articulations des vérins-amortisseurs sur la pièce fixe associée sont à une même distance de l'axe d'articulation du balancier correspondant.

D'autres caractéristiques et avantages de l'invention apparaîtront plus clairement à la lumière de la description qui va suivre et des dessins annexés, concernant des modes de réalisation particuliers, en référence aux figures, où :
- la figure 1 illustre en vue latérale, un train d'atterrissage conforme à l'invention, ici à trois diabolos, en position train bas ;
- les figures 2 et 3 illustrent à plus grande échelle, respectivement en vue latérale et en vue frontale, l'une des jambes du train précédent, toujours en position train bas, et la figure 4 illustre, en vue latérale, la même jambe en position train haut ;
- la figure 5, qui est à rapprocher de la figure 2, illustre un autre mode de réalisation du train d'atterrissage selon l'invention, avec pour chaque jambe un vérin-amortisseur multi-fonctions ;
- les figures 6 et 7 illustrent, à plus grande échelle, respectivement en vue latérale et en vue frontale, l'une des jambes du train de la figure 5 ;
- la figure 8 illustre en coupe une structure avantageuse de vérin-amortisseur pouvant équiper chaque jambe du train de la figure 5, qui inclut en plus la possibilité de baraquer l'avion à l'arrêt au sol.

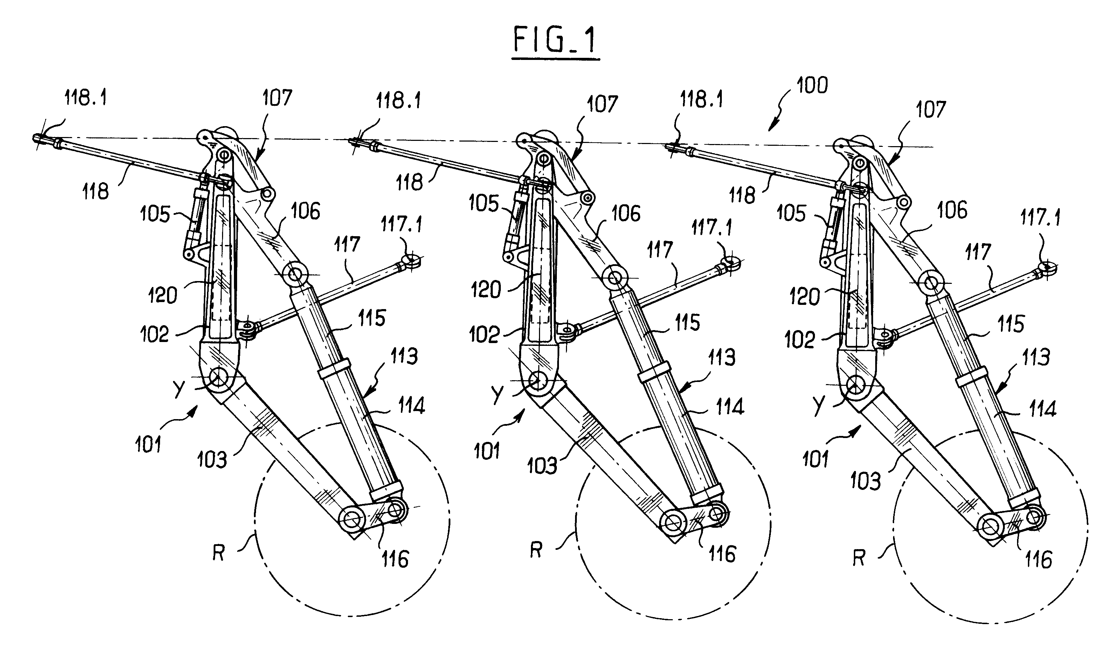

La figure 1 illustre un train d'atterrissage relevable 100 pour avion gros porteur, conforme à l'invention. Ce train d'atterrissage comporte en l'espèce trois jambes indépendantes agencées les unes derrière les autres pour former, en position train bas, une rangée parallèle au plan longitudinal médian de l'avion, mais il va de soi que l'invention n'est aucunement limitée au nombre de jambes que comporte ce train d'atterrissage.

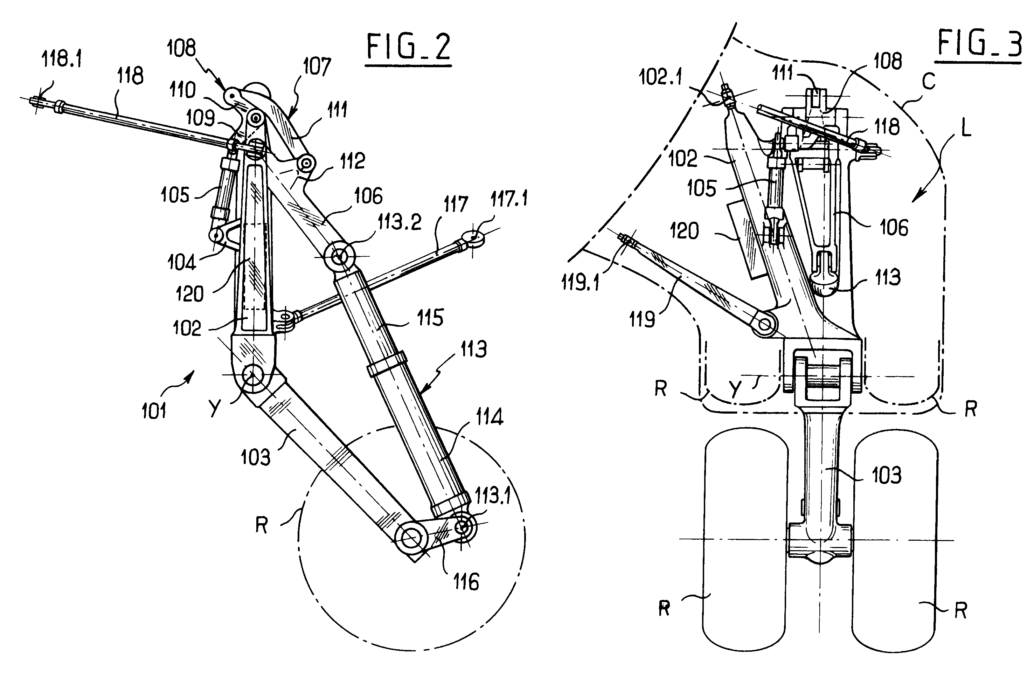

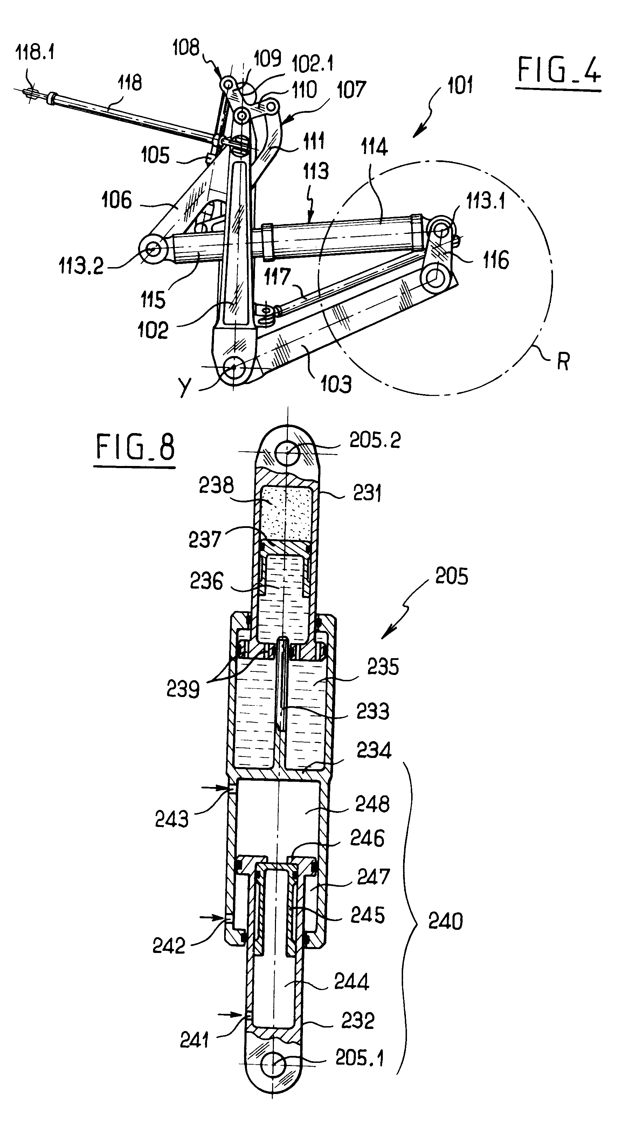

La structure de chacune des jambes indépendantes du train d'atterrissage 100 sera mieux comprise en se référant aux figures 2 et 3 illustrant l'une de ces jambes en position train bas, et à la figure 4, illustrant cette même jambe en position train haut.

Chaque jambe 101 comporte une pièce de structure 102 qui est rigidement solidaire de la structure d'avion, et un balancier 103 qui est articulé sur l'extrémité inférieure de cette pièce de structure, en pouvant pivoter autour d'un axe Y perpendiculaire au plan longitudinal médian de l'avion, de façon que ce balancier soit relevable verticalement avec sa paire de roues R en diabolo, par actionnement d'un vérin de manoeuvre associé à cette jambe. Dans le cadre du mode de réalisation illustré aux figures 1 à 4, chaque jambe 101 du train comporte un vérin de manoeuvre 105 dont la fonction est d'assurer le relevage ou la descente de la jambe correspondante, c'est-à-dire de la paire de roues en diabolo montée en extrémité du balancier 103 associé, et un amortisseur 113 qui constitue un organe fonctionnel indépendant du vérin de manoeuvre. La pièce de structure 102 comporte ainsi un appendice 104 sur lequel est articulé le corps du vérin de manoeuvre 105, la tige de ce vérin étant reliée à un système articulé 107 reliant ledit vérin à un panneau 106 qui est articulé en partie haute de la pièce de structure 102, l'amortisseur 113 étant alors articulé à une extrémité sur un appendice 116 du balancier 103 (axe 113.1), et à son autre extrémité sur ce panneau 106 (axe 113.2).

Conformément à une caractéristique de l'invention, chaque jambe 101 comporte une génération hydraulique autonome 120 qui lui est propre, pour actionner le vérin de manoeuvre 105 associé, afin de pouvoir relever au moins partiellement le balancier 103 et la paire de roues en diabolo associée, lorsque l'avion est au sol, en cours de roulage ou à l'arrêt. En l'espèce, on a illustré schématiquement un bloc 120 monté sur la pièce de structure 102, ce bloc fonctionnel étant de préférence du type électro-pompe. Cette génération autonome peut être alimentée en électricité soit à partir de la génération avion, soit au sol, à partir d'une génération incluse dans un dispositif de maintenance.

Il est ainsi possible d'effectuer des manoeuvres de baraquage ou des opérations de changements de pneu alors que le ou les moteurs de l'avion sont à l'arrêt, ce que ne permettaient pas les agencements de la technique antérieure.

On distingue sur la figure 3 le logement L associé au train d'atterrissage relevable 100, logement qui est délimité par un carénage C du fuselage de l'avion, et dans lequel vient se loger, en position train haut, le balancier de chaque jambe indépendante, avec la paire de roues en diabolo correspondante.

Le fait de prévoir une génération hydraulique indépendante, propre à chaque jambe 101 du train d'atterrissage relevable, permet ainsi de commander le relevage total ou partiel d'une jambe quelconque, lorsque l'avion et au sol, en cours de roulage ou à l'arrêt. Ainsi, si l'on souhaite faciliter la manoeuvrabilité de l'avion en cours de roulage, le pilote peut aisément procéder au relevage d'une jambe du train, éventuellement aussi de la jambe symétrique par rapport au plan longitudinal médian de l'avion, chaque train comportant alors seulement deux paires de roues en diabolo. En outre, lorsque l'avion est à l'arrêt au sol, il est possible de relever légèrement l'un quelconque des diabolos pour effectuer un changement de roue. Dans le cadre de chacune de ces opérations, la génération hydraulique indépendante de la jambe concernée est seule actionnée, ce qui évite toute interaction avec les autres jambes. Il va de soi que la totale indépendance des moyens d'actionnement propres à chaque jambe du train d'atterrissage permet de simplifier l'organisation des raccordements, puisqu'il suffit de prévoir une gestion centralisée purement électrique commandant les électro-pompes individuelles associées à chacune des jambes.

De préférence, les générations hydrauliques indépendantes associées à chacune des jambes comporteront un ensemble fonctionnel constitué par un moteur électrique, une pompe hydraulique, un accumulateur hydraulique, une bâche hydraulique, et des servo-valves de commande pour les raccordement au vérin de manoeuvre correspondant. Les cheminements hydrauliques sont alors réduits aux raccordements entre chaque génération indépendante et le vérin de manoeuvre correspondant d'une part, et le dispositif de baraquage intégré dans l'amortisseur d'autre part.

Il est en outre avantageux que l'amortisseur 113 soit conçu de façon à inclure un système d'affaissement, lequel système est naturellement commandé par la génération hydraulique 120 de la jambe concernée, afin de pouvoir baraquer l'avion à l'arrêt au sol pour lui conférer une assiette inclinée prédéterminée. Dans ce cas, la tige 115 de l'amortisseur de la jambe concernée rentre dans le corps 114 associé, et cette rentrée est contrôlée pour avoir l'assiette inclinée désirée de l'avion.

On distingue en outre sur les figures 2 à 4 la structure particulière du système articulé 107 reliant le vérin de manoeuvre 105 au panneau articulé associé 106, les axes d'articulation concernés étant parallèles à l'axe d'articulation Y du balancier correspondant 103. En l'espèce, le système articulé 107 comporte un levier 108 articulé en partie haute de la pièce de structure associée 102, ce levier étant constitué par un bras 109 qui est relié au vérin de manoeuvre 105, et un autre bras 110, sensiblement perpendiculaire au premier, qui est relié à une extrémité d'une bielle banane 111 dont l'autre extrémité est articulée sur un appendice 112 du panneau associé 106. Pour passer de la position train bas à la position train haut, la génération hydraulique indépendante 120 actionne le vérin de manoeuvre 105, en vue de la sortie de la tige de ce vérin, ce qui fait pivoter le levier 108, et par suite le panneau articulé 106 par l'intermédiaire de la bielle de liaison 111, pour arriver finalement à la position illustrée en figure 4, position dans laquelle le balancier 103 avec sa paire de roues en diabolo R est en totalité contenu dans le logement de réception du carénage de l'avion.

La pièce de structure 102 est rigidement solidaire de la structure de l'avion, et cette solidarisation est assurée d'une part par une liaison directe en extrémité supérieure de ladite pièce (point 102.1), et indirectement par l'intermédiaire d'au moins deux éléments de contreventement. En l'espèce, on a prévu un panneau 119 (visible sur la figure 3), dont l'axe d'articulation est parallèle au plan longitudinal médian de l'avion, qui est lié au point 119.1 à la structure d'avion, une bielle de contreventement 117 articulée par une extrémité sur la pièce de structure 102, et reliée au point 117.1 à son autre extrémité à la structure d'avion, et enfin une bielle supplémentaire 118, qui est essentiellement une bielle de reprise d'efforts visant à augmenter encore la rigidité, cette dernière bielle étant articulée par une extrémité en partie haute de la pièce de structure 102, et étant reliée par son autre extrémité au point 118.1 à la structure d'avion. Ainsi que cela est visible sur la figure 1, chacune des jambes 101 comporte ses propres moyens de contreventement, conformément au principe d'indépendance indiqué plus haut.

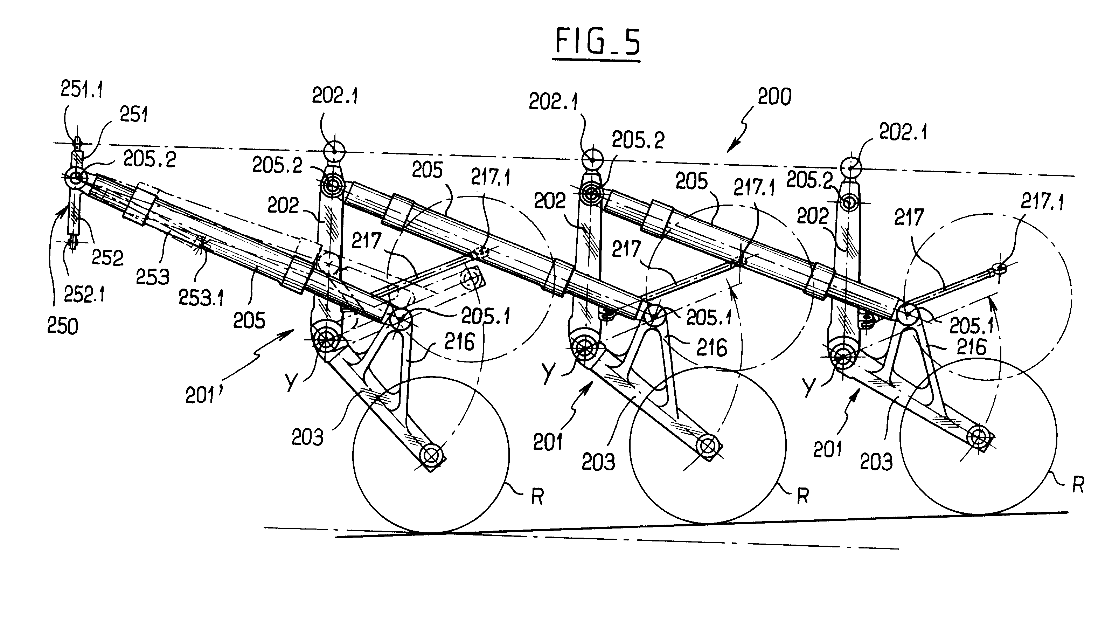

On va maintenant décrire, en se référant aux figures 5 à 7, un autre mode de réalisation du train d'atterrissage selon l'invention, avec pour chaque jambe un vérin-amortisseur multi-fonctions.

Le train d'atterrissage relevable 200 comporte là encore, mais à titre d'exemple seulement, un ensemble de trois jambes indépendantes, avec pour chaque jambe une pièce de structure 202 rigidement solidaire de la structure d'avion, et un balancier 203 articulé sur l'extrémité inférieure de cette pièce de structure, en pouvant pivoter autour d'un axe Y perpendiculaire au plan longitudinal médian de l'avion, de façon que, comme précédemment, ce balancier soit relevable verticalement avec sa paire de roues R par actionnement du vérin de manoeuvre associé à cette jambe.

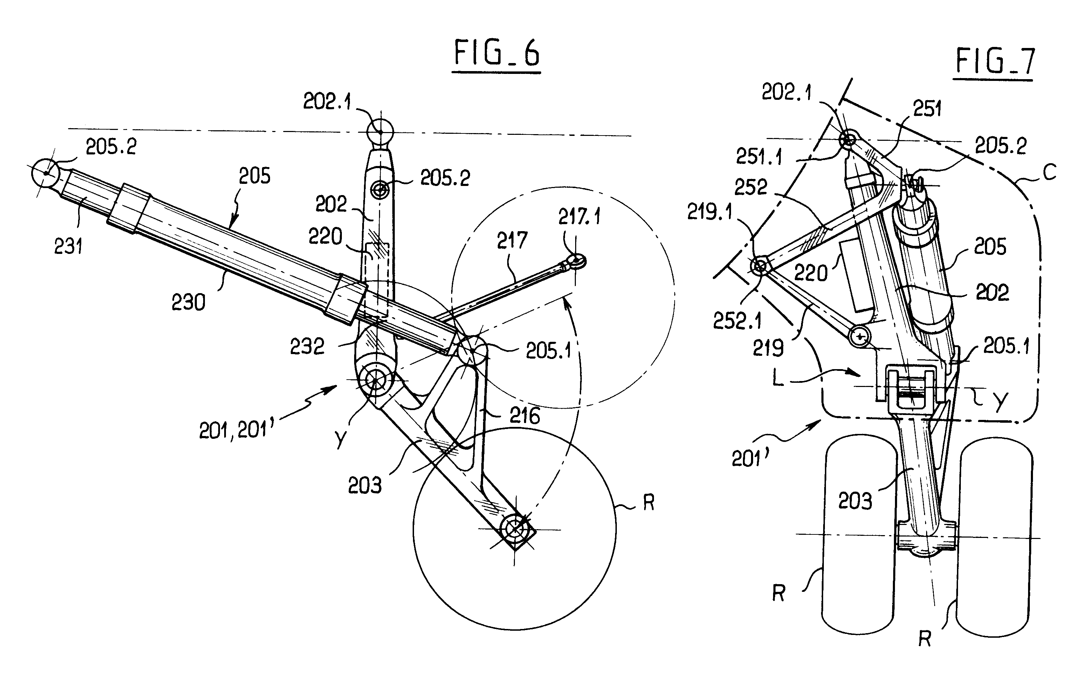

A la différence du train d'atterrissage précédemment décrit, chaque jambe comporte un vérin amortisseur 205 qui fait à la fois fonction d'amortisseur et de vérin de manoeuvre. Ce vérin-amortisseur 205 est articulé à une extrémité sur un appendice prolongé 216 du balancier 203, et à son autre extrémité sur une pièce fixe qui est rigidement solidaire de la structure d'avion, les axes d'articulation concernés étant parallèles à l'axe d'articulation Y de ce balancier. On a illustré sur la figure 5 un mode d'exécution particulier dans lequel, pour les jambes 201 qui sont en arrière de la jambe 201' la plus avancée de sa rangée, la pièce fixe sur laquelle vient s'accrocher le vérin-amortisseur 205 n'est autre que la pièce de structure 202 de la jambe précédente, au niveau d'une articulation 205.2. Pour la jambe la plus avancée 201', il est alors nécessaire de prévoir une pièce fixe qui est une pièce séparée, reliée par trois points à la structure d'avion. Les pièces de structure 202 étant rigidement solidaires de la structure de l'avion, l'accrochage des vérins-amortisseurs 205 sur ces pièces de structure ne constitue en aucun cas un couplage susceptible d'interférer avec l'indépendance des jambes du train d'atterrissage. On pourrait naturellement en variante prévoir une pièce séparée pour l'accrochage de chacun des vérins-amortisseurs du train d'atterrissage, mais le mode de réalisation illustré ici procure une simplification notable de la structure. En l'espèce, la pièce séparée est réalisée sous la forme d'une pièce en forme de V 250, cette pièce s'étendant transversalement au plan longitudinal médian de l'avion. La pièce 250 a été représentée sur la vue générale de la figure 5, et sur la vue de détail de la figure 7 montrant en vue frontale la jambe 201' la plus avancée de sa rangée. La pièce en forme de V 250 comporte ainsi un bras 251 relié au point 251.1 à la structure d'avion, et un autre bras 252 également relié par son extrémité 252.1 à la structure d'avion. Ainsi que cela est visible sur les figures 5 et 7, le point d'accrochage 251.1 de la pièce en forme de V 250 est aligné avec les points d'accrochage 202.1 des pièces de structure 202, et, ainsi que cela est mieux visible sur la figure 7, le point d'accrochage 252.1 de cette pièce en forme de V 250 est aligné avec le point d'accrochage 219.1 du panneau de contreventement 219 qui est articulé sur la pièce de structure 202, et aussi avec le point d'accrochage 217.1 de la bielle 217. On distingue en outre sur la figure 5 une bielle 253 assurant le contreventement de cette pièce en forme de V 250, cette bielle étant accrochée par son extrémité au point 253.1 à la structure d'avion, et ce point d'accrochage 253.1 est ici sur la même ligne horizontale que les points d'accrochage 217.1 des bielles de contreventement 217 associées à la pièce de structure 202.

Il va de soi que l'on pourra remplacer la pièce en forme de V 250 et sa bielle de contreventement 253 par un ensemble de trois bielles formant une triangulation pour la liaison rigide réalisant l'accrochage du point 205.2 du vérin-amortisseur 205.

Ainsi que cela est également visible sur la figure 5, les points d'accrochage 205.2 des vérins-amortisseurs 205 sur la pièce fixe associée 202 ou 250 sont à une même distance de l'axe d'articulation Y du balancier correspondant 203.

Sur les figures 6 et 7, on distingue également la génération hydraulique indépendante 220 associée à chaque jambe du train d'atterrissage 200, cette génération étant par exemple fixée sur la pièce de structure 202 des jambes associées 201 ou 201'.

Il est par ailleurs intéressant que la structure du vérin-amortisseur 205 soit agencée de façon à inclure un système d'affaissement commandé par la génération hydraulique 220 de la jambe concernée, afin de pouvoir en plus baraquer l'avion à l'arrêt au sol, pour lui conférer une assiette inclinée prédéterminée. Sur les figures 5 à 7, on distingue ainsi le corps 230 du vérin-amortisseur 205, duquel saillent deux tiges-pistons 231 et 232, la première étant associée à la fonction amortisseur, et la seconde à la double fonction de relevage et de baraquage qui est commandée par la génération hydraulique indépendante associée. Les articulations correspondantes du vérin-amortisseur 205 sont respectivement notées 205.2 et 205.1, les axes de ces articulations étant naturellement parallèles à l'axe d'articulation Y du balancier associé 203.

On a illustré à titre d'exemple, sur la figure 8, une structure avantageuse de vérin-amortisseur qui est agencée de façon à inclure la possibilité de baraquer l'avion à l'arrêt au sol.

Un tel vérin-amortisseur est de conception connue, de sorte que la description de ses composants et de son fonctionnement sera succincte.

Le vérin-amortisseur 205 comporte ainsi un corps 230 duquel saille deux tiges pistons 231 et 232. La tige 231 comporte une chambre hydraulique 236 délimitée par un piston séparateur 237 de l'autre côté duquel on trouve une chambre 238 de fluide gazeux basse pression. Le corps 230 comporte un fond fixe 234 qui présente une tige centrale 233 de guidage de la tige piston 231, et qui délimite une chambre hydraulique 235 communiquant, par l'intermédiaire de passages 239 formant diaphragmes, avec les chambres situées de l'autre côté du piston correspondant. Ces organes assurent la fonction amortisseur, de façon tout à fait traditionnelle.

En partie inférieure, on trouve l'ensemble fonctionnel 240 comportant les organes qui assurent la double fonction de relevage et de baraquage. La tige-piston 232 inclut un piston mobile 245, qui délimite une chambre inférieure 244, et le piston de cette tige-piston 232 délimite une chambre de pleine section 248, et une chambre annulaire 247. Des orifices 241, 242, 243 sont associés aux chambres respectives 244, 247, 248, la fermeture ou l'ouverture de ces orifices étant commandée par des électrovannes associées non représentées ici.

Pour le relevage normal, l'orifice 241 est fermé, et le piston intérieur 245 est maintenu en butée contre l'épaulement central 246 du piston de la tige-piston 232, l'ensemble se comportant comme un fond fixe. La mise à la pression de l'orifice 242 et la mise à la bâche de l'orifice 243 provoquent alors le relevage du balancier associé, et l'inverse la descente dudit balancier. Pour le baraquage, l'orifice 243 est fermé, tandis que l'orifice 241 est mis à la pression et l'orifice 242 à la bâche. Cette structure permet en outre d'effectuer un relevage intermédiaire, ceci par exemple pour effectuer un changement de roue. Dans ce cas, l'orifice 243 est fermé, et l'orifice 242 est mis à la pression, tandis que l'orifice 241 est mis à la bâche. On obtient ainsi deux courses distinctes, qui confèrent une grande souplesse dans l'utilisation requise de ce vérin-amortisseur.

L'invention n'est pas limitée aux modes de réalisation qui viennent d'être décrits, mais englobe au contraire toute variante, reprenant, avec des moyens équivalents, les caractéristiques essentielles énoncées plus haut.

## Revendications

1. Train d'atterrissage relevable pour avion gros porteur, du type comportant une pluralité de jambes indépendantes agencées les unes derrière les autres pour former, en position train bas, une rangée parallèle au plan longitudinal médian de l'avion, et en extrémité de chacune desquelles est montée une paire de roues en diabolo, caractérisé en ce que chaque jambe (101 ; 201) comporte une pièce de structure (102; 202) rigidement solidaire d'une structure d'avion, et un balancier (103 ; 203) articulé sur l'extrémité inférieure de cette pièce de structure en pouvant pivoter autour d'un axe (Y) perpendiculaire au plan longitudinal médian de l'avion, de façon que ledit balancier soit relevable verticalement avec sa paire de roues (R) par actionnement d'un vérin de manoeuvre (105 ; 205) associé à cette jambe, et ladite jambe comporte en outre une génération hydraulique autonome (120 ; 220) qui lui est propre pour actionner le vérin de manoeuvre (105 ; 205) associé, afin de pouvoir relever au moins partiellement le balancier (103 ; 203) de n'importe quelle jambe du train lorsque l'avion est au sol, en cours de roulage ou à l'arrêt.

2. Train d'atterrissage relevable selon la revendication 1, caractérisé en ce que chaque jambe (101) dudit train comporte un amortisseur (113) articulé à une extrémité sur un appendice (116) du balancier (103) de cette jambe, et à son autre extrémité sur un panneau (106) qui est articulé en partie haute de la pièce de structure associée (102), les axes d'articulation concernés étant parallèles à l'axe d'articulation (Y) dudit balancier.

3. Train d'atterrissage selon la revendication 2, caractérisé en ce que l'amortisseur (113) inclut un système d'affaissement commandé par la génération hydraulique (120) de la jambe concernée, afin de pouvoir baraquer l'avion à l'arrêt au sol pour lui conférer une assiette inclinée prédéterminée.

4. Train d'atterrissage relevable selon la revendication 2 ou la revendication 3, caractérisé en ce que le vérin de manoeuvre (105) de chaque jambe (101) est articulé à une extrémité sur la pièce de structure associée (102), et à son autre extrémité sur un système articulé (107) reliant ledit vérin au panneau articulé associé (106), les axes d'articulation concernés étant parallèles à l'axe d'articulation (Y) du balancier associé (103).

5. Train d'atterrissage relevable selon la revendication 4, caractérisé en ce que le système articulé (107) comporte un levier (108) articulé sur la pièce de structure associée (102), constitué par un bras (109) qui est relié au vérin de manoeuvre (105), et un autre bras (110) qui est relié à une extrémité d'une bielle banane (111) dont l'autre extrémité est articulée sur un appendice (112) du panneau associé (106).

6. Train d'atterrissage relevable selon l'une des revendications 2 à 5, caractérisé en ce que la pièce de structure associée (102) est reliée à la structure d'avion à la fois directement (102.1), et indirectement par l'intermédiaire d'éléments de contreventement comportant un panneau (119) et au moins une bielle (117, 118).

7. Train d'atterrissage relevable selon la revendication 1, caractérisé en ce que chaque jambe (201 ; 201') dudit train comporte un vérin-amortisseur (205) faisant fonction d'amortisseur et de vérin de manoeuvre, ledit vérin-amortisseur étant articulé à une extrémité sur un appendice (216) du balancier (203) de cette jambe, et à son autre extrémité sur une pièce fixe (202 ; 250) rigidement solidaire de la structure d'avion, les axes d'articulation concernés étant parallèles à l'axe d'articulation (Y) dudit balancier.

8. Train d'atterrissage relevable selon la revendication 7, caractérisé en ce que le vérin-amortisseur (205) inclut un système d'affaissement commandé par la génération hydraulique (220) de la jambe concernée, afin de pouvoir en plus baraquer l'avion à l'arrêt au sol pour lui conférer une assiette inclinée prédéterminée.

9. Train d'atterrissage relevable selon la revendication 7 ou la revendication 8, caractérisé en ce que la pièce fixe est constituée, pour les jambes (201) qui sont en arrière de la jambe (201') la plus avancée de sa rangée, par la pièce de structure (202) de la jambe précédente, la pièce fixe associée à la jambe la plus avancée (201') étant une pièce séparée reliée par trois points à la structure d'avion, en particulier une pièce en forme de V (250) s'étendant transversalement et contreventée par une bielle associée (253).

10. Train d'atterrissage relevable selon l'une des revendications 7 à 9, caractérisé en ce que les articulations (205.2) des vérins-amortisseurs (205) sur la pièce fixe associée (202 ; 250) sont à une même distance de l'axe d'articulation (Y) du balancier correspondant.
